(19) Europäisches Patentamt
European Patent Office
Office européen des brevets

(11) **EP 2 175 421 A1**

(12) **EUROPEAN PATENT APPLICATION**

(43) Date of publication:
**14.04.2010 Bulletin 2010/15**

(51) Int Cl.:
***G06T 7/20*** (2006.01)

(21) Application number: **08305676.2**

(22) Date of filing: **13.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Thomson Licensing**
**92443 Issy-les-Moulineaux Cedex (FR)**

(72) Inventors:
• **Badrinarayanan, Vijay**
**92443 Issy-les-Moulineaux Cedex (FR)**

• **Le Clerc, François**
**92443 Issy-les-Moulineaux Cedex (FR)**
• **Perez, Patrick**
**92443 Issy-les-Moulineaux Cedex (FR)**
• **Oisel, Lionel**
**92443 Issy-les-Moulineaux Cedex (FR)**

(74) Representative: **Huchet, Anne**
**Thomson**
**1, rue Jeanne d'Arc**
**92443 Issy-les-Moulineaux Cedex (FR)**

(54) **Device and method for tracking an object in a sequence of frames**

(57) The invention relates to a device (5) for tracking an object in a sequence of frames. The tracking device comprises a set of local patch trackers which are interconnected by geometric interconnections for tracking local patches from one frame to the next. The tracking device further comprises control means (55) adapted to control the rigidity of the geometric interconnections.

The invention also relates to a method for tracking an object in a sequence of frames.

FIGURE 4

**Description**

1. FIELD OF THE INVENTION

The invention belongs to object tracking domain. Specifically, the present invention relates to a device and a method for tracking any general moving object in a sequence of frames.

2. BACKGROUND OF THE INVENTION

Numerous applications in a variety of domains require the segmentation and tracking of objects in a sequence of images. In post-production, colourists will want to alter the colour of an isolated object in a scene. This technique also makes it possible to enhance broadcast videos, for example by highlighting an object of interest, such as a player in a soccer match, or blurring an element that should not be recognized by the audience such as a logo, a car number plate, or a face, in a documentary or news story. Other applications can be found in the domains of visual monitoring (e.g., traffic on a motorway), surveillance, content-based indexing, or video coding.

Visual tracking poses a formidable challenge to the research community, and today the requirements in reliability and accuracy of tracking systems cannot in general be met by fully automated systems. It proves especially difficult to track not only the location, but also information regarding the size and shape of the object as its appearance changes because of camera motion (e.g., object growing as a result of camera zoom-in), 3D motion of the object outside the image plane (e.g., rotation in depth), or non-rigidity (e.g., of an articulated body).

Visual tracking algorithms vary in their degree of robustness against distractive measurements and their ability to precisely outline the boundaries of the target object. The state of art can be broadly classified into two categories possessing one of the above two qualities. A relevant metric for this classification is the dimension of the state space in which the tracking algorithm operates. This dimension equals the number of scalar parameters that are required to describe the state of the tracked object at any frame: it equals 2 when just the 2D location (x,y) of the object is computed, 3 when scale changes are tracked in addition, and can be set to large values when tracking is applied to the object shape, modeled, for example, as an N-vertex polygon.

Trackers working in state spaces of small dimensions perform well under drastic illumination changes, short occlusions and small out of image plane (depth) rotations of the target. These trackers typically rely on color histograms or small reference image windows (templates) to model the appearance of the object. Techniques in this category are usually employed for imprecise tracking of a target over a lengthy duration of time.

On the other hand contour trackers working in state spaces of larger dimensions accurately delineate the target boundary but need frequent user interaction to steer the unstable parts of the contour. Such trackers are usually driven by geometric cues and gradients at the occluding contours of the object. They are typically employed over time periods of a few seconds.

Dealing with target scale changes and rotations in depth is another issue. The most common technique for estimating target scale is approximation to one of a few discrete scales as in the paper entitled "Kernel-based Bayesian filtering for object tracking", by B. Han, Y. Zhu, D. Comaniciu and L. Davis, published in the proceedings of the 2005 International Conference on Computer Vision and Pattern Recognition (CVPR). Other techniques include imposing a simple affine motion constraint on the object and estimating the model parameters by tracking/matching a few feature points. To achieve meaningful results, the features must be well distributed over the target and even so, when there is combined depth rotation and scaling such a model is oversimplified. Beyond this it is also necessary to adapt the appearance model of the target during scaling. Rotations in depth are hardly considered at all in the literature, except perhaps in systems where extensive offline learning is required as in Liu, X. Generic Face Alignment using Boosted Appearance Model.

3. BRIEF SUMMARY OF THE INVENTION

The object of the invention is to alleviate these disadvantages of the prior art. In particular, the tracking device and method described in the invention implicitly accommodates changing object appearances due to rotations in depth and follows scale changes of the object without explicit motion model estimation, thus bringing an improvement over existing methods.

The invention thus relates to a device for tracking an object in a sequence of frames. The tracking device comprises a set of local patch trackers which are interconnected by geometric interconnections for tracking local patches from one frame to the next. The tracking device further comprises control means adapted to control the rigidity of the geometric interconnections.

According to an advantageous embodiment, the control means are a slider control adapted to slide between two extreme values.

According to another advantageous embodiment, the device further comprises marking means adapted to mark at least one of the local patch trackers as inactive.

In addition, the device may further comprise means adapted to reset the position of the local patch trackers.

The invention also relates to a method for tracking an object in a sequence of frames. The method comprises the steps of:

- tracking independently a set of m local patches, interconnected by geometric interconnections, from one frame to the next, where m is an integer greater than or equal to 3;
- computing an importance sampling density from the m tracked patches;
- computing a probability density function of a geometric layout of the tracked object on the basis of the importance sampling density, of the tracked patches and taken into account a rigidity term of the geometric interconnections; and
- computing a final geometric layout for the tracked object from the probability density function.

According to a specific embodiment, the method further comprises a step of inactivating at least one of the m local patches.

According to an advantageous embodiment, the method further comprises a step of controlling the relative weight in the probability density function between the rigidity term and measurements provided by the individual tracked patches.

According to another advantageous embodiment, the rigidity term is computed as a distance between a current geometric layout and a predefined layout.

According to a specific embodiment, the final geometric layout is computed as the mean of the probability density function.

4. BRIEF DESCRIPTION OF THE DRAWINGS

Other features and advantages of the invention will appear with the following description of some of its embodiments, this description being made in connection with the drawings in which:

- Figure 1 depicts a frame with 4 patches identified by small squares connected with a polygon;
- Figure 2 depicts a fully connected graph whose nodes represent patches;
- Figure 3 illustrates the patches and a patch tracking method;
- Figure 4 represents a flowchart illustrating an embodiment of the method according to the invention; and
- Figure 5 represents an architecture of a device for tracking objects in a sequence of frames according to the invention.

5. DETAILED DESCRIPTION OF THE INVENTION

This invention discloses a system for robustly tracking the coarse shape of an object over long durations in a video, with minimal assistance from a human operator.

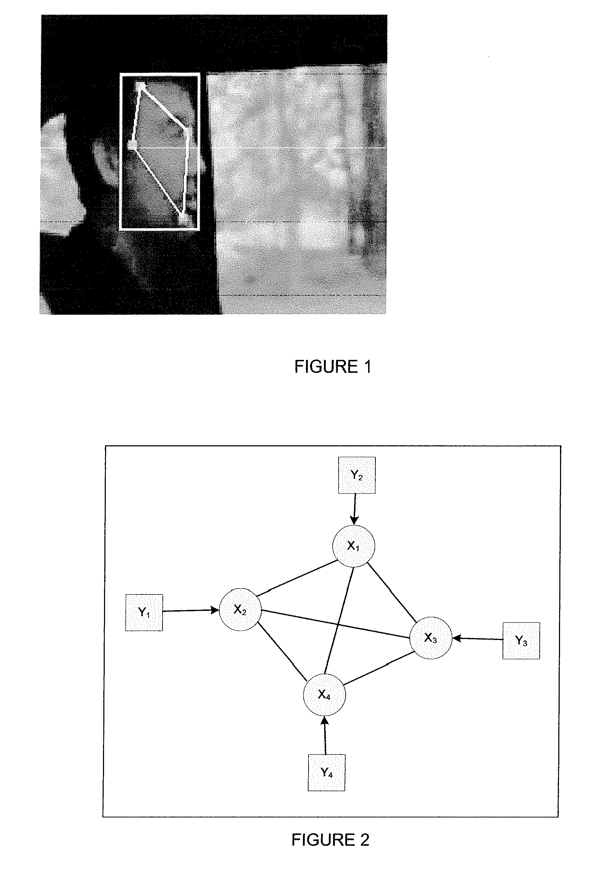

The geometrical model for the object shape is made up of a set of interconnected local patches, as represented on figure 2. Each local patch is identified on figure 2 as a node. This rough shape is termed a "layout" or "geometric layout" or simply a graph. The "state" of each patch is tracked by a patch tracker and is represented by a state vector $X_i$. Here this vector defines the position of the patch in image coordinates and an observation model $Y_i$ that drives the estimation of this state vector. The model for each state vector is probabilistic, in that the value of the state at each frame is not determined by a deterministic location, but rather by a probability density function as a function of spatial position, each value of which represents the probability of the object to be positioned at this location. In the following the term "patch" stands for "local patch".

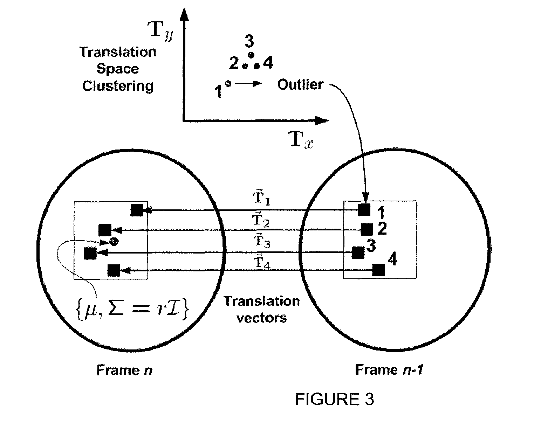

According to a specific embodiment, a patch is constructed as a set of, possibly overlapping, feature point templates. It is emphasized that a patch can be of any arbitrary shape and is seldom rectangular. An example patch constructed using 4 feature point templates is shown in figure 3, where each point template is marked as a small black rectangle. Each template is a small image window of fixed size, advantageously 21 x 21 pixels. Following prior art, each template is tracked into the sequence of frames using normalized cross-correlation. However, it is to be noted that any probabilistic tracking scheme providing as its output a probability density function of the estimated patch location is applicable to the invention. For example, in a simpler scheme, each patch could be characterized by just one small image window representing a template to be tracked, and the observation at each frame consists of the correlation surface between this template and a window in the current image centered at the location of the estimated patch location in the previous frame. Indeed, after normalization of its integral to unity, such a correlation surface would be interpretable as a probability density function.

The graph depicted in figure 2 consists of 4 fully connected local patches, but in general any number of nodes, i.e. local patches, equal to or greater than 3 may be considered, with any total or partial interconnection graph between the nodes.

The location and size of the graph nodes are provided by the operator of the system in an initialization step 10. Typically, the patches will span the image of the object in a more or less coarse way, depending on the number of patches used, and will be positioned in areas of the object image with strong textured content, such as corners, in order to maximize the success of the patch trackers.

Coming back to the graph model shown in figure 2, the joint hidden state variable is denoted as $X = \{x_i, i \in \nu\}$ and the corresponding set of observations denoted as $Y = \{y_i, i \in \nu\}$ where $\nu$ is the set of nodes (vertices) in the graph. The joint posterior of the hidden state and the observation, parameterized by $\theta, P_R$, is taken to have the following form.

$$p(X|Y; \theta, P_R) \propto l_t(Y|X) l_P(X|P_R) \prod_{(i,j) \in \Gamma} \Psi(x_i, x_j|\theta), (1)$$

where $l_t(Y|X)$ is a joint likelihood function.

The prior is factored into a geometric layout similarity function $l_p(X|P_R)$ with fixed parameter $P_R$ and pairwise potential (or compatibility) functions $\{\psi(x_i, x_j|\theta), (i,j) \in \Gamma\}$ with $\Gamma$ denoting the set of all edges in the graph. It is to be noted that the set of pairwise potential functions represent the geometric layout and, from here on, the term geometric potentials will be used interchangeably with geometric layout. Parameter $\theta$ encapsulates the set of variables defining the probabilistic model of the pairwise potential functions $\Psi(x_i, x_j)$, thereby defining the knowledge on the geometric layout. Parameter $P_R$ is a polygon that stores a reference layout for the geometric layout of patches. Given the data $Y = y$ at some instant in the video sequence, the objective is to infer the marginal posteriors $\{p(x_i|Y = y; \theta, P_R), i \in \nu\}$ or beliefs at each node in the set V, of the graph. To achieve this, the prior knowledge on the geometric layout, represented by parameter $\theta$, must be updated online in conjunction with the likelihood. A direct application of the standard iterative Expectation Maximisation (EM) algorithm is not suitable as the normalization factor or partition function of the joint posterior in Eqn. 1 is difficult to obtain in closed form in general cases. A Monte-Carlo sampling based alternative is then sought after to approximate the posterior given an estimate of $\theta$. The parameter $\theta$ is then updated using the Iterative conditional Estimation (ICE) technique proposed by Salzenstein et al in the ICASSP (1995) paper entitled "Unsupervised Bayesian segmentation in hidden markovian field". This non-sequential iterative algorithm is detailed in the following description.

The set of observations Y is provided by the output of the local patch trackers that track each patch from one frame to the next using any convenient tracking algorithm. An example of such patch tracker is given below, however other patch trackers may be used. The measurement or observation model associated to this patch tracking is defined as

$$y_i = \arg\min_{x_i} D[f(x_i), f^*] + \eta \quad (2)$$

where D is a distance function, typically template/patch cross-correlation or distances between color histograms. $f(x_i)$ is the extracted local patch and $f^*$ is a reference model for the tracked patch and $\eta$ is the corrupting noise whose statistics are unknown. The non-linearity of the above model and the unknown characteristics of the noise make it impossible to define an analytical form for the measurement density conditional on the state. The standard alternative then is to define a measurement likelihood function. In the proposed scheme the following Gaussian form of measurement likelihood is defined and utilized.

$$l_t(Y|X) = \frac{1}{Z} \prod_{i \in \nu} N(x_i; \arg\min_{x_i} D[f(x_i), f^*], \sum_i) \quad (3)$$

where the subscript t emphasizes the fact that it is derived from patch trackers, $Z$, the normalization, is known and $\Sigma_i$ is an empirically determined variance. The pairwise potential functions describing the relationship between the local state variables are assumed Gaussian as shown below:

$$\psi(x_i, x_j) = N\left(\left|x_i - x_j\right|; \mu_{ij}, \Sigma_{ij}\right), (i, j) \in \Gamma \ (4)$$

The parameter $\theta = \{\mu_{ij}, \Sigma_{ij}; (i,j) \in \Gamma\}$ encapsulates the parameters of the pairwise potential functions

At step 10, the algorithm is initialized with frame N. Patches are manually selected at the periphery of the tracked object in a way that the layout of the patches are isomorphic to the general shape of the object, for instance, an elliptical layout for human faces. The number of patches are varied depending on the shape of the object and the computational power at one's disposal. The means of the pairwise potential functions $\Psi(x_i, x_j)$ are set from the initial locations of the patches, and their initial variance is empirically fixed as $Q = \lambda I_{2x2}$ with $\lambda = 26.0$.

At step 20, a new frame (N+1) is processed.

At step 21, each node, i.e. each local patch, of the graph is tracked independently. In the particular embodiment wherein a patch is constructed as a set of feature point templates, patch tracking involves tracking each feature point in its set and using these tracking results to arrive at the estimated location of the whole patch. A patch, see top right hand corner of figure 3, is constructed using F = 4 feature points each with templates of size 21 × 21. Templates are marked as small rectangles. Normalized Cross-Correlation is used for point tracking.

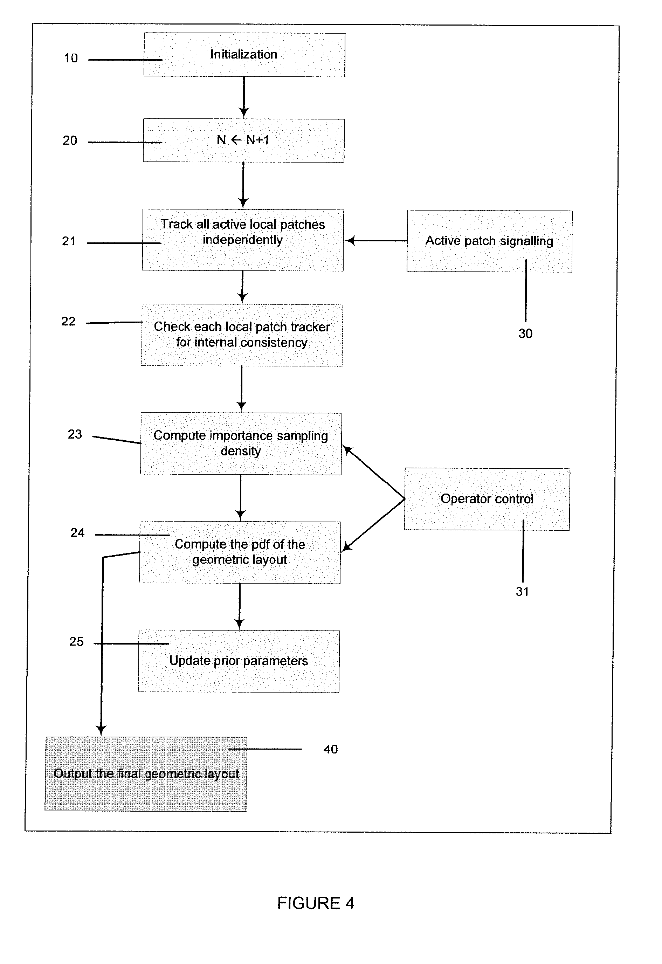

In the particular case wherein a patch is constructed as a set of feature point templates, an optional step 22 (delineated with dotted line on figure 4) may be applied. At step 22, the consistency of the individual template forming each patch is evaluated, and template trackers that have been detected as inconsistent are replaced with new ones or are eliminated in order to adapt to deformations or rotations in depth. This is an important issue which controls the efficacy of the proposed scheme to adapt to changing appearances. In this scheme, a clustering algorithm is applied to the set of displacements measured for each template. The displacement of each template is compared to the displacement of the other templates in the patch, and a bin count is incremented for every displacement that lies within a predetermined clustering radius r of this displacement. In a particular embodiment, r is set to 13.0. In a specific embodiment, any template whose bin count is less than half the number of templates in the patch is classified as an outlier. The outlier templates in each patch are eliminated from the F points and a new subset of replacement feature points, denoted $\{F_i^R, i \in \nu\}$ are sampled/resampled from corresponding densities:

$$F_i^R \sim N(x_i; E_{p(x_i|Y;\theta,P_R)} \delta_{x_i^S}(x_i), S), i \in \nu \qquad (14)$$

where the expectation is evaluated using the Monte Carlo (MC) approximation of the belief and S is a fixed sampling covariance (diagonal) matrix. Alternatively, a more complex template resampling scheme based on outlier rejection control can be implemented. Such a scheme is described in detail in the paper from V.Badrinarayanan et al. entitled "Probabilistic color and adaptive multi-feature tracking with dynamically switched priority between cues" published in ICCV 2007, the content of which is included herein by reference.

An important point arises in this context of feature point resampling. When new feature points are sampled, new templates centered on these points are associated to them; a consequence of which the patch composition changes. These new templates correspond to new parts of the target. Therefore, in a patch, some templates could possibly be from distant past (if a particular point in the patch has been consistently tracked for a long duration), some relatively new and others new. Clearly, as this set of templates also form the reference model for the patch, resampling feature points (thereby their templates) means changing this reference model. This change is essential to capture appearing parts of the target to offset tracker drift to an extent.

At step 23, an importance sampling distribution is computed. Given a new frame in the sequence and an initial estimate of the parameter $\theta_{k-1}$, at iteration k-1, the joint posterior in Eqn. 1 is approximated using samples drawn from a suitable importance sampling density constructed using $l_t$ as described below (see the tutorial paper "A tutorial on Particle Filters for Online Nonlinear/Non-Gaussian Bayesian Filtering", by M. Sanjeev Arulampalam, Simon Maskell, Neil Gordon and Tim Clapp, published in the IEEE Transactions on Signal Processing, vol. 50 n°2, February 2002)

Letting aside the geometric layout based prior which makes sampling unpractical, consider the following model of the joint posterior parameterized by the estimate $\theta_{k-1}$:

$$g(X|Y;\theta_{k-1}) = l_t(Y|X) \prod_{(i,j)\in\Gamma} \Psi(x_i, x_j|\theta) \ (5)$$

where $l_t$ is defined by Eqn. 3. Probabilistic inference on this model using standard belief propagation, as described for instance in the paper of Weiss et al. entitled "Understanding belief propagation and its generalizations" and published in G. Lakemeyer and B.Nebel, editors, Exploring Artificial Intelligence in the New Millenium, Morgan Kauffman, 2002, results in marginal posteriors $\{g(x_i|Y;\theta_{k-1}), i \in v\}$ or beliefs, denoted as $\{b_{k-1}(x_i), i \in v\}$. A proposal density is then developed using these beliefs as:

$$q(X|Y;\theta_{k-1}) = \prod_{i \in v} b_{k-1}(x_i) \quad (6)$$

At step 24, the probability density function (known as PDF) of the geometric layout is computed. To this aim, samples $\{X^S \sim q(X|Y;\theta_{k-1}), s=1:M\}$ are drawn and the unnormalized importance sampling weights $w^s$ computed following the standard weight recursion formula of the particle filter, see for instance equation (48) in the tutorial paper "A tutorial on Particle Filters for Online Nonlinear/Non-Gaussian Bayesian Filtering", by M. Sanjeev Arulampalam, Simon Maskell, Neil Gordon and Tim Clapp, published in the IEEE Transactions on Signal Processing, vol. 50 n° 2, February 2002:

$$w^s = \frac{l_t(Y|X^s) l_p(X^s|P_R) \prod_{(i,j) \in \Gamma} \Psi(x_i^s, x_j^s|\theta)}{\prod_{i \in v} b(x_i^s)} \quad (7)$$

Following the above computation, the joint posterior parameterized by estimate $\theta_{k-1}$ can be approximated as,

$$p(X|Y;\theta_{k-1}, P_R) \approx \sum_{s=1:M} \widetilde{w}^s \delta_{X^s}(X) \quad (8)$$

where $\widetilde{w}^s = \dfrac{w^s}{\sum_{s=1:M} w^s}$ is the normalized importance weight. In Eqn. 8 it is assumed that the geometric layout similarity function in the prior, $lp(X|P_R)$, can be evaluated pointwise. Apart from this fact this function merits special attention.

In the invention, geometric layouts are in the form of polygons. At the initialization frame for the tracking sequence the polygon connecting the patch is stored as a reference polygon $P_R$ for the target. A polygon represented by sample $X^S$, denoted as $P(X^S)$ is compared with this reference to derive a measure of similarity for this sample. This matching is done using the standard polygon matching algorithm prescribed by Arkin et al. in the paper entitled "An efficiently computable metric for comparing polygonal shapes" in IEEE Trans. on PAMI 13(3):209-216 (1991), using polygon turning angle based polygon coding; which outputs a $L_2$ distance between the representational codes of $P_R$ and $P(X^S)$. The matching is in practice invariant to rotation to a reasonable extent. The geometric layout similarity function is then defined as shown below:

$$l_p(X^S|P_R) \overset{\Delta}{=} \frac{1.0}{\|P_R - P(X^S)\|} \quad (9)$$

At step 40, the probability density function of the posterior distribution of the geometric layout for frame N+1, which is computed in step 24, is used to output the tracking result for this frame, i.e. the final geometric layout. In a preferred embodiment of this invention, the output geometric layout is computed as the mean of the PDF of this posterior. However, it is to be understood that other derivation schemes can be considered, such as, for example, the mode (maximum a posteriori or MAP estimate) of the PDF.

At step 25, the parameters defining the priors in the graph are updated. To this aim, the Iterative Conditional Estimation (ICE) technique may be used. The ICE prescribes parameter estimation given known state $X$ and an instance of the observation $Y=\gamma$. The essence of this technique lies in the following iteration;

$$\theta_k = E_{p(X|Y;\theta_{k-1},P_R)}\,\Theta(X,Y)\ (10)$$

where $\Theta(X,Y)$ is a statistical estimator of $\theta$ given $X$ and $Y$. Substituting the Monte Carlo (MC) approximation from Eqn. 8 in Eqn.10 leads to a sample based approximation:

$$\theta_k \approx \sum_{s=1:M} \widetilde{w}^s \Theta(X^S,Y)\ (11)$$

In an advantageous embodiment of this invention, $\Theta(X,Y)$ is taken to be the Maximum Likelihood Estimator (MLE);

$$\tilde{\theta} = \arg\max_{\theta}\ p(X|Y;\theta,P_R)\ (12)$$

but any other estimate of $\theta$ based on the statistics $\Theta(X,Y)$ could also be considered. With the Gaussian model adopted for the pairwise potential functions $\Psi(x_i,x_j)$, eqn.10 leads to a parameter estimation of the form,

$$\mu_{ij} = \sum_{s=1:M} \widetilde{w}^s \left|x_i^s - x_j^s\right|\ \ ,(i,j)\in\Gamma\ (13a)$$

$$\Sigma_{ij} = \sum_{s=1:M} \widetilde{w}^s \left(\left|x_i^s - x_j^s\right|-\mu_{ij}\right)^T\left(\left|x_i^s - x_j^s\right|-\mu_{ij}\right),(i,j)\in\Gamma\ (13b)$$

The steps 23 to 25 can be iterated until convergence.

In general, each tracker follows the part of the object to which it has been attached in the initialization phase. When the object undergoes simple 2D motion such as a translation in the image plane, assuming the individual patch trackers behave properly, a graph obtained by running the patch trackers independently and extracting a geometric layout based on their position at each frame will provide satisfactory tracking results.

If, however, the tracked object undergoes a more complex motion, say for instance a 3D rotation out of the image plane, the individual trackers may suffer from substantial drift or even complete failure, as the part of the object to which there were initially attached may be occluded. In this case, a strategy to maintain some consistency in the tracked object shape is to drive the estimate of the geometric layout when some patch trackers fail, is by employing constraints that assume a temporal consistency of the geometrical properties of the geometric layout, effectively replacing the erroneous measurements given by a patch tracker by a location estimated from the measurements provided by the other patch trackers, assuming the relative location of the patches on the geometric layout remain reasonably constant over time.

Therefore, in a second aspect of the invention, a strategy is implemented to balance the individual measurements from patch trackers against the prior knowledge on the geometry of the layout.

However, it is recognized that this balance is difficult to obtain from a fully automated analysis. Indeed, in the case of 3D rotations the geometrical constraints on the geometric layout should be emphasized, exactly the opposite needs to be done when the object grows uniformly in size, for example as the result of a camera zoom-in. In this case, the individual patch trackers can be expected to succeed if the rate of scaling of the image is not too high, and the geometric layout should be allowed to quickly adapt to allow for changes in object size.

To this end, at step 30, the operator is given the possibility to mark as inactive, one or several patches for which visual analysis reveals that tracking is very likely to fail. This is typically the case when the object to be tracked is partially occluded by a foreground object, said object masking one or several of the patches and therefore preventing the tracking processes for these patches to succeed. To this effect, the operator is provided control means in the user interface, such as a predefined action on the visual representation of these patches. In a preferred embodiment of this invention, a right mouse click on a patch at some frame toggles the state of this patch to "actively tracked" to "inactive" from the current frame onwards and the appearance, for example the colour, of the representation of the patch is changed to reflect this change of state Another click on the same patch at a later frame will restore the state of this patch back to "actively tracked", from this frame onwards and the appearance of the patch on the user interface will be restored back to its initial state to reflect this new change. The consequence of setting a patch to inactive is that the tracking measurement for this patch is no longer taken into account for approximating the posterior PDFs in the next frames, which, in effect, amounts to forcing the covariance matrices $\Sigma_{ij}$ for this patch to infinity times the identity matrix.

Step 31 refers to another user interaction process according to which the operator, using means such as a slider control on the user interface, defines the rigidity of the layout, i.e. the rigidity of the geometrical interconnection between the local patch trackers. Alternately stated, this rigidity input defines the relative weight of the known past geometry of the layout against the measurements provided by the individual patch tracking displacements, in the computation of the PDF of the geometric layout. The slider control is able to slide between two extreme values. This rigidity input is translated into an (online) modification of the variances $\Sigma_{ij}$ of the pairwise potential functions $\Psi(x_i,x_j)$ in the graph model.

According to another embodiment, the user can by just dragging the user interface representation of the nodes of the graph, manually resets their locations; this translates into an update of the means $\mu_{ij}$ of the pairwise potential functions $\Psi(x_i,x_j)$ in the graph models.

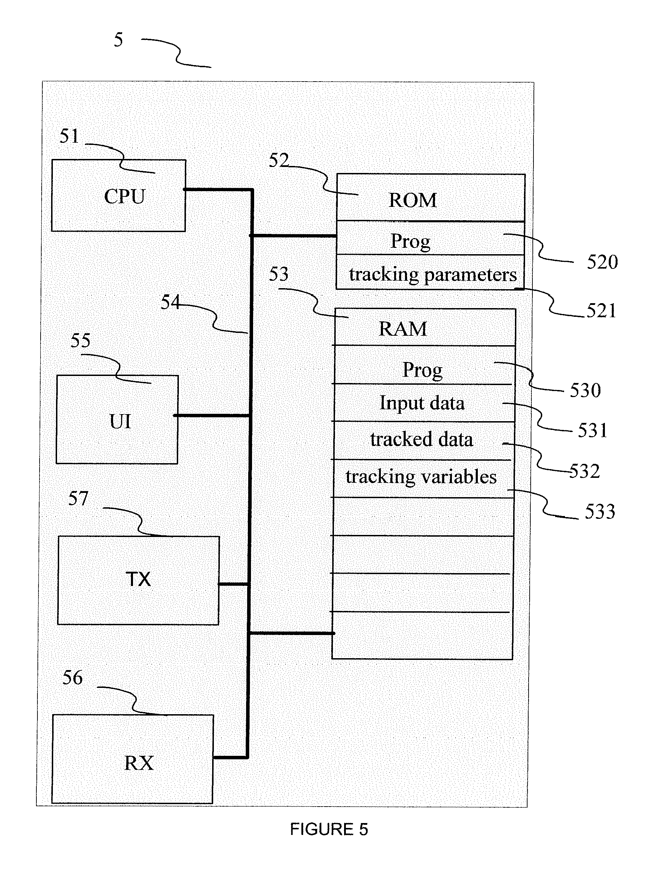

Figure 5 represents an architecture of a device 5 for tracking objects in a sequence of frames according to the invention. Device 5 comprises the following elements that are linked together by a data and address bus 54:

- a microprocessor 51 (or CPU), which is, for example, a DSP (or Digital Signal Processor);
- a ROM (or Read Only Memory) 52;
- a RAM (or Random Access Memory) 53;
- a user interface 55;
- a reception module 56 for reception of image data, i.e. the frames of the sequence;
- possibly a module 57 for transmission of geometric layout (i.e. the output of the tracking method) to an application and/or a display.

Each of these elements of figure 5 are well known by those skilled in the art and won't be disclosed further.
ROM 52 comprises:

- a program "prog" 520; and
- tracking parameters 521 (such as the number of patches making up the geometric layout, pre-defined thresholds involved in the patch tracking process, or reference polygon $P_R$ used in the computation of the geometric layout PDF).

The algorithm of the tracking method according to the invention is stored in the ROM 52. When switched on, the CPU 51 uploads the program 520 in the RAM and executes the corresponding instructions.
RAM 53 comprises:

- in a register 530, the program executed by the CPU 51 and uploaded after switch on of the device 5;
- input data in a register 531;
- tracking data (such as the means $\mu_{ij}$ and covariance matrices $\Sigma_{ij}$ defining the locations and uncertainties of the patch trackers in the current frame, or the sample-based approximations of the sampling distribution and the posterior PDF of the geometric layout) in different state of the tracking method in a register 532; and
- other variables used for tracking in a register 533.

According to a variant of the invention, the digital part of the device 5 is implemented in pure hardware configuration (e.g. in one or several FPGA, ASIC or VLSI with corresponding memory) or in a configuration using both VLSI and DSP.
The user interface of the device provides a visual representation of the location of the patch trackers at each frame. A representation feature of the patches, such as their color, provides a visual indication as to the status of the patch, that is to say, whether it is actively tracked or inactive. Consequently, a pre-defined action on a patch, for example a right mouse click, allows the user to toggle the state of the patch at a given frame from "actively tracked" to "inactive", and vice-versa.
In addition, the user interface is especially adapted to make it possible for a user to control the rigidity of the geometrical interconnections between the local patch trackers. To this aim, the user interface 55 comprises a slider control. This rigidity input is translated into an (online) modification of the variances $\Sigma_{ij}$ of the pairwise potential functions

$\Psi(x_i, x_j)$ in the graph model.

According to another embodiment the user interface 55 further comprise a window displaying the current frame to be processed with the patch tracker current positions. The interface is further adapted so that the user can manually reset the locations of the patch trackers by just dragging the nodes of the graph; this translates into an update of the means $\mu_{ij}$ of the pairwise potential functions $\Psi(x_i, x_j)$ in the graph models.

Advantageously the tracking scheme of the invention accommodates changing object appearances due to rotations in depth (measuring rotations in depth in arbitrary sequences with no known camera parameters is a difficult problem) and follows scale changes of the object without explicit motion model estimation (the accuracy of model estimates is controlled by unknown measurement noise) thanks to an appropriate user interface. To this aims a concerted participation of an ensemble of local patch trackers using their individual measurements/observations and their geometrical interconnection constraint (is this correct) is proposed. A probabilistic graphical framework is formulated to analyze these distributed measurements and the important problem of geometric layout update.

Annex

**Algorithm**: At frame n;

**1. Initialization: (step10)**

$$\theta_0 = \left\{ \mu_{ij}^{n-1}, \Sigma_{ij} = Q; (i,j) \in \Gamma \right\}$$

$$l_t(Y|X) = \frac{1}{Z} \prod_{i \in v} N(x_i; \arg\min_{x_i} D[f(x_i), f^*], \Sigma_i)$$

where, the diagonal covariances $Q, \{\Sigma_i, i \in v\}$ are empirically set.

$$k \leftarrow k - 1:$$

**2. Importance Sampling Approximation of Posterior (steps 22 and 23)**

Beliefs derived from Belief Propagation

$$\left[\tilde{\Sigma}_i\right]^{-1} = \left[\Sigma_i\right]^{-1} + \Sigma_{j \in v-i} \left[\Sigma_j + Q\right]^{-1}, i \in v$$

$$\tilde{\mu}_i = \tilde{\Sigma}_i \left( \left[\Sigma_i\right]^{-1} \mu_i + \Sigma_{j \in v-i} \left[\Sigma_j + Q\right]^{-1} \left[\mu j + \mu_{ji}\right] \right), i \in v$$

$$b_{k-1}(x_i) = N(x_i; \tilde{\mu}_i, \tilde{\Sigma}_i), i \in v$$

Proposal Density and Samples

$$q(X|Y;\theta_{k-1}) = \prod_{i \in V} b_{k-1}(x_i)$$

$$\left\{ X^s \sim q\left(\frac{X}{Y,\theta_{k-1}}\right), s = 1:M \right\}$$

Importance Weights and posterior

$$w^s = \frac{l_t(Y|X^s)l_p(X^s|P_R)\prod_{(i,j)\in\Gamma}\Psi(x_i^s,x_j^s|\theta)}{\prod_{i\in V}b(x_i^s)}$$

$$p(X|Y;\theta_{k-1},P_R) \approx \sum_{s=1:M}\tilde{w}^S\delta_{X^s}(X),$$

where $\tilde{w}^S = \dfrac{w^s}{\displaystyle\sum_{s=1:M}w^s}$

**3. Parameter Update: (step 24)**

$$\mu_{ij} = \sum_{s=1:M}\tilde{w}^s|x_i - x_j| \quad ,(i,j)\in\Gamma$$

$$\Sigma_{ij} = \sum_{s=1:M}\tilde{w}^s\left(|x_i - x_j| - \mu_{ij}\right)^T\left(|x_i - x_j| - \mu_{ij}\right),(i,j)\in\Gamma$$

Set $\mu_{ij}^n = \mu_{ij}$

**Claims**

1.   A device (5) for tracking an object in a sequence of frames comprising a set of local patch trackers for tracking local patches from one frame to the next, **characterized in that**, said local patch trackers being interconnected by geometric interconnections,
said device further comprises control means (55) adapted to control the rigidity of said geometric interconnections.

2.   A device according to claim 1, wherein the control means are a slider control adapted to slide between two extreme values.

**3.** A device according to claim 1 or 2, wherein the device further comprises marking means adapted to mark at least one of the local patch trackers as inactive.

**4.** A device according to any of claims 1 to 3, wherein the device further comprises means adapted to reset the position of the local patch trackers.

**5.** A method for tracking an object in a sequence of frames, wherein the method comprises the steps of:

- tracking (21) independently a set of m local patches, interconnected by geometric interconnections, from one frame to the next, where m is an integer greater than or equal to 3;
- computing (23) an importance sampling density from the m tracked patches;
- computing (24) a probability density function of a geometric layout of the tracked object on the basis of the importance sampling density, of the tracked patches and taken into account a rigidity term of said geometric interconnections; and
- computing (40) a final geometric layout for the tracked object from said probability density function.

**6.** A method according to claim 5, wherein said method further comprises a step for inactivating (30) at least one of the m local patches.

**7.** A method according to claim 5 or 6, wherein said method further comprises a step of controlling (31) the relative weight in said probability density function between said rigidity term and measurements provided by the individual tracked patches.

**8.** A method according to any of claims 5 to 7, wherein said rigidity term is computed as a distance between a current geometric layout and a predefined layout.

**9.** A method according to any of claims 5 to 8, wherein said final geometric layout is computed as the mean of said probability density function.

FIGURE 1

FIGURE 2

FIGURE 3

10 — Initialization

20 — N ← N+1

21 — Track all active local patches independently ← Active patch signalling

30

22 — Check each local patch tracker for internal consistency

23 — Compute importance sampling density

Operator control

24 — Compute the pdf of the geometric layout

31

25 — Update prior parameters

Output the final geometric layout — 40

FIGURE 4

FIGURE 5

**EP 2 175 421 A1**

<table>
<tr><td colspan="4" align="center">EUROPEAN SEARCH REPORT</td><td align="center">Application Number<br>EP 08 30 5676</td></tr>
</table>

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | V. BADRINARAYANAN, F. LE CLERC, L. OISEL, AND P. PEREZ: "The Eighth International Workshop on Visual Surveillance - VS2008 (2008) Geometric Layout Based Graphical Model for Multi-Part Object Tracking" INRIA-00325621, ELECTRONIC PREPRINT FOR THE EIGHTH INTERNATIONAL WORKSHOP ON VISUAL SURVEILLANCE - VS2008, MARSEILLE (17-10-2008), [Online] 29 September 2008 (2008-09-29), pages 1-9, XP002517873 Retrieved from the Internet: URL:http://hal.inria.fr/inria-00325621/en/> [retrieved on 2009-03-05] * the whole document * ----- | 1-9 | INV.<br>G06T7/20 |
| | | | TECHNICAL FIELDS<br>SEARCHED (IPC)<br><br>G06T |

The present search report has been drawn up for all claims

| Place of search | Date of completion of the search | Examiner |
|---|---|---|
| Munich | 5 March 2009 | Borotschnig, Hermann |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. Han ; Y. Zhu ; D. Comaniciu ; L. Davis.** Kernel-based Bayesian filtering for object tracking. *proceedings of the 2005 International Conference on Computer Vision and Pattern Recognition*
- **Salzenstein et al.** Unsupervised Bayesian segmentation in hidden markovian field. *ICASSP,* 1995
- **V.Badrinarayanan et al.** Probabilistic color and adaptive multi-feature tracking with dynamically switched priority between cues. *ICCV,* 2007

- **M. Sanjeev Arulampalam ; Simon Maskell ; Neil Gordon ; Tim Clapp.** A tutorial on Particle Filters for Online Nonlinear/Non-Gaussian Bayesian Filtering. *IEEE Transactions on Signal Processing,* February 2002, vol. 50 (2
- Understanding belief propagation and its generalizations. **Weiss et al.** Exploring Artificial Intelligence in the New Millenium. Morgan Kauffman, 2002
- **Arkin et al.** An efficiently computable metric for comparing polygonal shapes. *IEEE Trans. on PAMI,* 1991, vol. 13 (3), 209-216